# EUROPÄISCHE PATENTSCHRIFT

(11) **EP 4 565 810 B1**
(45) Veröffentlichungstag und Bekanntmachung des Hinweises auf die Patenterteilung: **24.06.2026**
(21) Anmeldenummer: 23748710.3
(22) Anmeldetag: 26.07.2023
(51) Int. Cl.: F17C 3/08

(54) **SPEICHERBEHÄLTER**
STORAGE CONTAINER
CONTENANT DE STOCKAGE

(30) Priorität: 03.08.2022 DE 102022002803
(43) Veröffentlichungstag der Anmeldung: 11.06.2025
(73) Patentinhaber: Linde GmbH, 82049 Pullach (DE)
(72) Erfinder: SCHÖNBERGER, Manfred, 82049 Pullach (DE); EHEGARTNER, Florian, 82049 Pullach (DE); HERWERTH, Christian Michael, 82049 Pullach (DE)
(74) Vertreter: Meilinger, Claudia Sabine
(86) Internationale Anmeldenummer: PCT/EP2023/025349
(87) Internationale Veröffentlichungsnummer: WO 2024/027951

(56) Entgegenhaltungen:
- EP-A1- 0 972 727
- US-A- 4 496 073
- US-A1- 2010 146 992

## Beschreibung

Die Erfindung betrifft einen Speicherbehälter zum Speichern eines Kryogens.

Der Anmelderin sind betriebsintern doppelwandige Speicherbehälter für flüssigen Wasserstoff bekannt, welche einen Außenbehälter und einen innerhalb des Außenbehälters angeordneten Innenbehälter zum Aufnehmen des flüssigen Wasserstoffs aufweisen. Ein zwischen dem Innenbehälter und dem Außenbehälter vorgesehener Spalt ist mit einem Vakuum beaufschlagt. Der Spalt kann zumindest abschnittsweise mit einem Isoliermaterial gefüllt sein. Um den Außenbehälter zu verstärken, ist es möglich, an diesem entlang einer Mittelachse des Speicherbehälters voneinander beabstandet angeordnete Verstärkungsringe vorzusehen.

US 2010/146992 A1 offenbart den Oberbegriff des Anspruchs 1.

Verstärkungsringe führen zum einen zu einer Erhöhung eines Leergewichts des Speicherbehälters und zum anderen zu einer Vergrößerung des Bauraums des Speicherbehälters. Dies gilt es zu verbessern.

Vor diesem Hintergrund besteht eine Aufgabe der vorliegenden Erfindung darin, einen verbesserten Speicherbehälter zur Verfügung zu stellen.

Demgemäß wird ein Speicherbehälter zum Speichern eines Kryogens vorgeschlagen. Der Speicherbehälter umfasst einen Innenbehälter zum Aufnehmen des Kryogens und einen Außenbehälter, in welchem der Innenbehälter aufgenommen ist, wobei der Außenbehälter Verstärkungsringe zum Verstärken des Außenbehälters aufweist. Erfindungsgemäß weist der Außenbehälter ein aus einem Verbundwerkstoff gefertigtes Stützelement auf, das zumindest abschnittsweise innerhalb eines zwischen zwei benachbarten Verstärkungsringen vorgesehenen Spalts angeordnet ist, um die Verstärkungsringe abzustützen.

Dadurch, dass das Stützelement vorgesehen ist, das die Verstärkungsringe abstützt, ist es möglich, einen Abstand der Verstärkungsringe voneinander zu vergrößern und/oder die Verstärkungsringe im Vergleich zu einem Speicherbehälter ohne ein derartiges Stützelement kleiner zu dimensionieren, insbesondere bis zum Grenzfall keine Verstärkungsringe. Hierdurch kann eine Reduktion eines Leergewichts des Speicherbehälters erzielt werden. Ferner ist auch eine Verkleinerung eines Bauraums des Speicherbehälters möglich. Gleichzeitig kann eine Vergrößerung eines Bauraums des Innenbehälters erzielt werden.

Der Speicherbehälter ist insbesondere auch zum Transport des Kryogens geeignet. Daher kann der Speicherbehälter auch als Transportbehälter bezeichnet werden. Der Speicherbehälter ist zumindest doppelwandig und kann daher auch als doppelwandiger Speicherbehälter bezeichnet werden. Das Kryogen kann flüssiger Wasserstoff sein. Der Begriff "Kryogen" kann daher vorliegend gegen den Begriff "Wasserstoff" und umgekehrt getauscht werden. Das Kryogen kann jedoch auch flüssiges Helium, flüssiger Stickstoff, flüssiger Sauerstoff, Argon, Neon oder dergleichen sein. Da der Speicherbehälter bevorzugt zur Aufnahme von flüssigem Wasserstoff geeignet ist, kann dieser auch als Wasserstoff-Speicherbehälter oder als Wasserstoff-Speichertank bezeichnet werden. Der Speicherbehälter kann Teil eines Fahrzeugs, insbesondere eines Wasserfahrzeugs, sein. In diesem Fall ist der Speicherbehälter für mobile Anwendungen geeignet. Der Speicherbehälter kann jedoch auch stationär, beispielsweise in der Gebäudetechnik, eingesetzt werden.

Der Speicherbehälter ist vorzugsweise rotationssymmetrisch zu einer Mittel- oder Symmetrieachse aufgebaut. Demgemäß sind auch der Innenbehälter und der Außenbehälter rotationssymmetrisch zu der Symmetrieachse aufgebaut. Der Speicherbehälter ist vorzugsweise derart angeordnet, dass die Symmetrieachse senkrecht zu einer Schwerkraftrichtung verläuft. Das heißt, der Speicherbehälter ist horizontal angeordnet. Der Speicherbehälter kann jedoch auch vertikal angeordnet sein. In diesem Fall ist die Symmetrieachse parallel zu der Schwerkraftrichtung orientiert.

Der Innenbehälter und der Außenbehälter sind vorzugsweise beide zylinderförmig. Der Innenbehälter und der Außenbehälter weisen jeweils einen zylinderförmigen Basisabschnitt auf, der rotationssymmetrisch zu der Symmetrieachse aufgebaut ist. Sowohl der Basisabschnitt des Innenbehälters als auch der Basisabschnitt des Außenbehälters sind endseitig mit jeweils zwei nach außen gewölbten Deckelabschnitten verbunden. Dies ist jedoch nicht zwingend so. Die Deckelabschnitte können auch anders ausgeführt werden. Der Innenbehälter ist insbesondere vollständig innerhalb des Außenbehälters angeordnet, so dass der Außenbehälter den Innenbehälter vollständig oder teilweise umhüllt oder einhüllt. Der Innenbehälter kann auch als Innentank bezeichnet werden. Der Außenbehälter kann auch als Außentank bezeichnet werden.

Die Verstärkungsringe sind insbesondere Teil des Außenbehälters. Wie zuvor erwähnt, weist der Außenbehälter einen Basisabschnitt auf, an dem bevorzugt die Verstärkungsringe vorgesehen sind. Die Verstärkungsringe können auch als Versteifungsringe bezeichnet werden. Demgemäß kann der Begriff "Verstärkungsring" beliebig gegen den Begriff "Versteifungsring" und umgekehrt getauscht werden. Insbesondere sind die Verstärkungsringe zum Versteifen des Außenbehälters geeignet. Unter der "Steifigkeit" ist vorliegend ganz allgemein der Widerstand eines Körpers gegen eine durch äußere Belastung aufgeprägte Verformung zu verstehen und vermittelt den Zusammenhang zwischen der Belastung des Körpers und dessen Verformung. Die Steifigkeit wird bestimmt durch den Werkstoff des Körpers und dessen Geometrie. Mit Hilfe der Verstärkungsringe kann somit ein Knicken oder Beulen des Außenbehälters verhindert werden.

Entlang der Symmetrieachse betrachtet sind die Verstärkungsringe voneinander beabstandet und nebeneinander angeordnet. Die Anzahl der Verstärkungsringe ist dabei beliebig. Jeweils zwischen zwei benachbarten Verstärkungsringen ist das Stützelement vorgesehen. Das Stützelement weist eine zylinderförmige Geometrie auf, die rotationssymmetrisch zu der Symmetrieachse aufgebaut ist. Der zwischen den beiden benachbarten Verstärkungsringen vorgesehene Spalt erstreckt sich entlang einer Radialrichtung des Speicherbehälters. Die Radialrichtung ist senkrecht zu der Symmetrieachse und von dieser weg orientiert.

Vorzugsweise füllt das Stützelement den Spalt zwischen den beiden benachbarten Verstärkungsringen vollständig auf. Die Verstärkungsringe stützen sich an dem Stützelement ab. Zwei benachbarte Verstärkungsringe sind somit mittelbar über das Stützelement aneinander abgestützt. Dass die Verstärkungsringe von dem Stützelement "abgestützt" werden, bedeutet vorliegend insbesondere, dass das Stützelement Kräfte von den Verstärkungringen aufnimmt. Insbesondere auf die Verstärkungsringe wirkende Kräfte werden von dem Stützelement aufgenommen und in den Außenbehälter eingeleitet. Das Stützelement kann kann jedoch auch Kräfte direkt auf den Außenbehälter übertragen.

Unter einem "Verbundwerkstoff" ist vorliegend ein Werkstoff oder ein Material zu versehen, das eine Matrix, beispielsweise ein Kunststoffmaterial, aufweist, in die ein Füllstoff, beispielsweise in der Form von Fasern, eingebettet ist. Das Kunststoffmaterial kann ein Thermoplast oder ein Duroplast, wie beispielsweise ein Epoxidharz, sein. Die Fasern können Langfasern oder Kurzfasern sein. Vorliegend kann unter einer "Kurzfaser" eine Faser mit einer Faserlänge von weniger als 5 mm zu verstehen sein. Demgemäß ist unter einer "Langfaser" eine Faser mit einer Faserlänge von mehr als 5 mm zu verstehen. Die Fasern können Glasfasern, Kohlenstofffasern, Aramidfasern, Naturfasern oder dergleichen sein. Auch die Verstärkungsringe können aus einem Verbundwerkstoff gefertigt sein.

Gemäß einer Ausführungsform ist der Innenbehälter innerhalb der Verstärkungsringe angeordnet.

Die Verstärkungsringe sind insbesondere ringförmig oder scheibenförmig und umfassen eine zylinderförmige Außenfläche und eine zylinderförmige Innenfläche. Die Außenfläche und die Innenfläche sind jeweils rotationssymmetrisch zu der Symmetrieachse aufgebaut. Der Innenbehälter ist durch die Verstärkungsringe hindurchgeführt. Das heißt insbesondere, dass die Verstärkungsringe den Innenbehälter vollständig umlaufen oder umschließen. Die Verstärkungsringe können die Innenbehälter auch nur teilweise oder unvollständig umlaufen oder umschließen.

Gemäß einer weiteren Ausführungsform ist der Innenbehälter innerhalb des Stützelements angeordnet.

Wie zuvor erwähnt, weist das Stützelement eine zylinderförmige oder rohrförmige Geometrie auf, welche den Innenbehälter umschließt oder einschließt. Das Stützelement schließt somit den Innenbehälter ein oder umhüllt diesen.

Gemäß einer weiteren Ausführungsform hüllt der Außenbehälter das Stützelement ein oder das Stützelement hüllt den Außenbehälter ein.

In dem erstgenannten Fall ist das Stützelement innenseitig an dem Außenbehälter angebracht. In dem zuletzt genannten Fall ist das Stützelement außenseitig an dem Außenbehälter angebracht. Der Außenbehälter kann jedoch auch ein Stützelement aufweisen, das innenseitig angebracht ist, und ein zusätzliches Stützelement, das außenseitig angebracht ist.

Gemäß einer weiteren Ausführungsform sind die Verstärkungsringe und das Stützelement innenseitig an dem Außenbehälter angebracht.

In diesem Fall sind die Verstärkungsringe mit Hilfe ihrer zylinderförmigen Außenfläche mit einer zylinderförmigen Innenfläche des Außenbehälters verbunden.

Gemäß einer weiteren Ausführungsform weist der Außenbehälter eine dem Innenbehälter zugewandte Innenfläche auf, wobei die Verstärkungsringe und das Stützelement zumindest abschnittsweise stoffschlüssig mit der Innenfläche verbunden sind.

Bei stoffschlüssigen Verbindungen werden die Verbindungspartner durch atomare oder molekulare Kräfte zusammengehalten. Stoffschlüssige Verbindung sind nicht lösbare Verbindungen, die sich nur durch Zerstörung der Verbindungsmittel und/oder der Verbindungspartner trennen lassen. Stoffschlüssig kann beispielsweise durch Kleben, Löten oder Schweißen verbunden werden. Vorliegend kann das Stützelement beispielsweise mit der Innenfläche des Außenbehälters verklebt sein. Die Verstärkungsringe können mit der Innenfläche des Außenbehälters verlötet, verschweißt und/oder verklebt sein. Ferner sind auch das Stützelement und die Verstärkungsringe stoffschlüssig miteinander verbunden. Insbesondere ist das Stützelement mit den Verstärkungsringen verklebt.

Gemäß einer weiteren Ausführungsform sind die Verstärkungsringe und das Stützelement außenseitig an dem Außenbehälter angebracht.

Die Verstärkungsringe und das Stützelement sind insbesondere mit einer Außenfläche des Außenbehälters verbunden. Zusätzlich können an dem Außenbehälter auch noch innenseitig Verstärkungsringe und ein entsprechendes Stützelement vorgesehen sein.

Gemäß einer weiteren Ausführungsform weist der Außenbehälter eine dem Innenbehälter abgewandte Außenfläche auf, wobei die Verstärkungsringe und das Stützelement stoffschlüssig mit der Außenfläche verbunden sind.

Die Verstärkungsringe weisen eine wie zuvor erwähnte zylinderförmige Innenfläche auf, welche stoffschlüssig mit der Außenfläche des Außenbehälters verbunden ist.

Gemäß einer weiteren Ausführungsform ist zwischen dem Innenbehälter und dem Außenbehälter ein mit einem Vakuum beaufschlagter Spalt vorgesehen, wobei die Verstärkungsringe und das Stützelement innerhalb des Spalts angeordnet sind.

Alternativ können die Verstärkungsringe und das Stützelement auch außerhalb des Spalts angeordnet sein. In diesem Fall sind die Verstärkungsringe und das Stützelement nicht innenseitig an dem Außenbehälter, sondern außenseitig an dem Außenbehälter vorgesehen. Unter einem "Vakuum" ist vorliegend insbesondere ein Druck von weniger als 300 mbar, bevorzugt von weniger als 10⁻³ mbar, weiter bevorzugt von weniger als 10⁻⁷ mbar, zu verstehen. Der Speicherbehälter ist somit vakuumisoliert oder vakuumgedämmt. Der Spalt erstreckt sich insbesondere entlang der Radialrichtung.

Gemäß einer weiteren Ausführungsform ist in dem Spalt ein den Innenbehälter einhüllendes Isolationselement angeordnet.

Vorzugsweise füllt das Isolationselement den Spalt nicht vollständig aus. Zwischen dem Isolationselement und dem Stützelement kann ein weiterer Spalt vorgesehen sein, der Teil des zuvor erwähnten Spalts ist. Dieser weitere Spalt ist optional. Das Isolationselement und das Stützelement können den zwischen dem Innenbehälter und dem Außenbehälter vorgesehenen Spalt auch vollständig ausfüllen. Das Isolationselement dient der Wärmedämmung. Das Isolationselement ist mehrlagig. Das heißt, das Isolationselement umfasst eine Vielzahl an Lagen oder Schichten. Das Isolationselement kann daher auch als mehrlagiges Isolationselement oder als mehrlagiges Wärmedämmelement bezeichnet werden. Insbesondere ist das Isolationselement eine sogenannte Multilayer Insulation (MLI). In diesem Fall umfasst das Isolationselement mehrere abwechselnd angeordnete Schichten oder Lagen aus perforierter und/oder geprägter Aluminiumfolie als Reflektor und Glaspapier als Abstandshalter zwischen benachbarten Aluminiumfolien. Das Isolationselement kann anstelle des zuvor erläuterten mehrlagigen Aufbaus auch eine Schüttung aus Perlit oder dergleichen aufweisen.

Gemäß einer weiteren Ausführungsform ist der Verbundwerkstoff langfaserverstärkt oder kurzfaserverstärkt.

Es kann auch eine Kombination von Kurzfasern und Langfasern vorgesehen sein. Die Fasern können beliebig gewählt werden. Beispielsweise kommen Glasfasern, Kohlenstoffasern, Aramidfasern, Naturfasern oder dergleichen zur Anwendung. Anstelle von Fasern kann der Verbundwerkstoff beiliebige andere Füllstoffe, wie beispielsweise Baumwollflocken, Mikrokugeln oder dergleichen, umfassen.

Gemäß einer weiteren Ausführungsform ist der Verbundwerkstoff ein Laminat oder eine Gussmasse.

Beispielsweise kann der Verbundwerkstoff auf den Außenbehälter aufgewickelt oder auflaminiert sein. In diesem Fall ist der Verbundwerkstoff ein mehrschichtiges Laminat mit Fasern, Fasergeweben, Fasergelegen oder Fasermatten, die in die Matrix des Verbundwerkstoffs eingebettet sind. Alternativ kann der Verbundwerkstoff auch gießbar oder spritzbar sein. In diesem ist der Verbundwerkstoff bevorzugt kurzfaserverstärkt.

Gemäß einer weiteren Ausführungsform sind die Verstärkungsringe aus einer Aluminiumlegierung oder aus einem Verbundwerkstoff gefertigt.

Hierdurch kann eine Gewichtsersparnis erzielt werden. Der Verbundwerkstoff kann ein faserverstärkter Verbundwerkstoff sein. Die Verstärkungsringe können jedoch beispielsweise auch aus Edelstahl gefertigt sein. Grundsätzlich können auch beliebige andere Metalle eingesetzt werden.

Gemäß einer weiteren Ausführungsform sind der Innenbehälter und/oder der Außenbehälter aus Edelstahl gefertigt.

Alternativ kann beispielsweise auch der Außenbehälter zumindest teilweise aus einem Verbundwerkstoff gefertigt sein. Auch der Innenbehälter kann einen Verbundwerkstoff aufweisen.

Gemäß einer weiteren Ausführungsform weist der Außenbehälter einen zylinderförmigen Basisabschnitt auf, an dem die Verstärkungsringe angebracht sind.

Die Verstärkungsringe sind stoffschlüssig mit dem Basisabschnitt verbunden. Wie zuvor erwähnt, ist der Basisabschnitt stirnseitig von zwei Deckelabschnitten verschlossen, die voneinander weg gewölbt sind. Dies ist jedoch nicht zwingend erforderlich. Die Verstärkungsringe sind bevorzugt nur an dem Basisabschnitt angebracht.

"Ein" ist vorliegend nicht zwangsweise als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine genaue Beschränkung auf genau die entsprechende Anzahl von Elementen verwirklicht sein muss. Vielmehr sind zahlenmäßige Abweichungen nach oben und nach unten möglich.

Weitere mögliche Implementierungen des Speicherbehälters umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Speicherbehälters hinzufügen.

Weitere vorteilhafte Ausgestaltungen des Speicherbehälters sind Gegenstand der Unteransprüche sowie der im Folgenden beschriebenen Ausführungsbeispiele des Speicherbehälters. Im Weiteren wird der Speicherbehälter anhand von bevorzugten Ausführungsformen unter Bezugnahme auf die beigelegten Figuren näher erläutert.
Fig. 1 zeigt eine schematische Schnittansicht einer Ausführungsform eines Speicherbehälters;
Fig. 2 zeigt die Detailansicht II gemäß Fig. 1;
Fig. 3 zeigt eine schematische Schnittansicht einer Ausführungsform eines Außenbehälters für den Speicherbehälter gemäß Fig. 1; und
Fig. 4 zeigt eine schematische Schnittansicht einer weiteren Ausführungsform eines Außenbehälters für den Speicherbehälter gemäß Fig. 1.

In den Figuren sind gleiche oder funktionsgleiche Elemente mit denselben Bezugszeichen versehen worden, sofern nichts anderes angegeben ist.

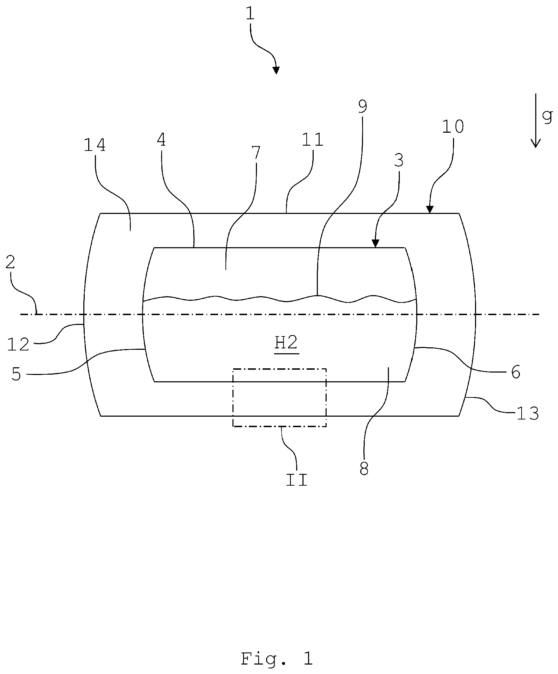

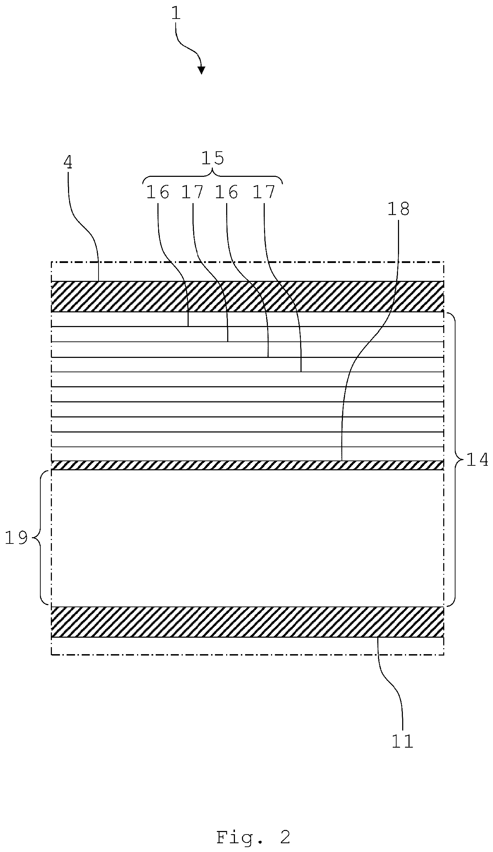

Die Fig. 1 zeigt eine schematische Schnittansicht einer Ausführungsform eines Speicherbehälters 1. Die Fig. 2 zeigt die Detailansicht II gemäß der Fig. 1. Nachfolgend wird auf die Fig. 1 und 2 gleichzeitig Bezug genommen.

Der Speicherbehälter 1 kann auch als Speichertank bezeichnet werden. Der Speicherbehälter 1 ist bevorzugt zur Aufnahme von flüssigem Wasserstoff H2 (Siedepunkt: 1 bara: 20,268 K = -252,882 °C) geeignet. Daher kann der Speicherbehälter 1 auch als Wasserstoff-Speicherbehälter oder als Wasserstoff-Speichertank bezeichnet werden. Der Speicherbehälter 1 kann jedoch auch für andere kryogene Flüssigkeiten eingesetzt werden. Beispiele für kryogene Fluide oder Flüssigkeiten, oder kurz Kryogene, sind neben dem zuvor erwähnten Wasserstoff H2 flüssiges Helium He (Siedepunkt 1 bara: 4,222 K = -268,928 °C), flüssiger Stickstoff N2 (Siedepunkt 1 bara: 77,35 K = -195,80 °C) oder flüssiger Sauerstoff O2 (Siedepunkt: 1 bara: 90,18 K = -182,97° C).

Der Speicherbehälter 1 kann ein Transportbehälter sein. Beispielsweise kann mit dem Speicherbehälter 1 flüssiger Wasserstoff H2 transportiert werden. Der Speicherbehälter 1 kann Teil eines Fahrzeugs, insbesondere eines Wasserfahrzeugs, sein. In diesem Fall ist der Speicherbehälter 1 für mobile Anwendungen geeignet. Der Speicherbehälter 1 kann jedoch auch stationär, beispielsweise in der Gebäudetechnik, eingesetzt werden.

Der Speicherbehälter 1 ist rotationssymmetrisch zu einer Mittel- oder Symmetrieachse 2 aufgebaut. Die Symmetrieachse 2 ist senkrecht zu einer Schwerkraftrichtung g orientiert. Der Speicherbehälter 1 umfasst einen ersten Behälter oder Innenbehälter 3, der ebenfalls rotationssymmetrisch zu der Symmetrieachse 2 aufgebaut ist. Der Innenbehälter 3 umfasst einen rohr- oder zylinderförmigen Basisabschnitt 4, der ebenfalls rotationssymmetrisch zu der Symmetrieachse 2 aufgebaut ist. Der Basisabschnitt 4 kann im Querschnitt eine kreisrunde oder annähernd kreisrunde Geometrie aufweisen.

Der Basisabschnitt 4 ist stirnseitig beidseits jeweils mit Hilfe eines Deckelabschnitts 5, 6 verschlossen. Die Deckelabschnitte 5, 6 sind gewölbt. Ein erster Deckelabschnitt 5 und ein zweiter Deckelabschnitt 6 sind gegensinnig gewölbt, so dass die Deckelabschnitte 5, 6 bezüglich des Basisabschnitts 4 nach außen gewölbt sind. Der Innenbehälter 3 ist fluiddicht, insbesondere gasdicht. Der Innenbehälter 3 ist aus Edelstahl gefertigt.

In dem Innenbehälter 3 ist der flüssige Wasserstoff H2 aufgenommen. In dem Innenbehälter 3 können, solange sich der Wasserstoff H2 im Zweiphasengebiet befindet, eine Gaszone 7 mit verdampftem Wasserstoff, H2 und eine Flüssigkeitszone 8 mit flüssigem Wasserstoff H2 vorgesehen sein. Der Wasserstoff H2 weist also nach dem Einfüllen in den Innenbehälter 3 zwei Phasen mit unterschiedlichen Aggregatszuständen, nämlich flüssig und gasförmig, auf. Das heißt, in dem Innenbehälter 3 befindet sich eine Phasengrenze 9 zwischen dem flüssigen Wasserstoff H2 und dem gasförmigen Wasserstoff H2.

Der Innenbehälter 3 ist vollständig innerhalb eines zweiten Behälters oder Außenbehälters 10 angeordnet. Der Speicherbehälter 1 ist somit doppelwandig. Auch der Außenbehälter 10 ist rotationssymmetrisch zu der Symmetrieachse 2 aufgebaut. Der Außenbehälter 10 umfasst, wie der Innenbehälter 3, einen rohr- oder zylinderförmigen Basisabschnitt 11, der rotationssymmetrisch zu der Symmetrieachse 2 aufgebaut ist. Der Basisabschnitt 11 kann im Querschnitt eine kreisrunde oder annähernd kreisrunde Geometrie aufweisen.

Der Basisabschnitt 11 ist stirnseitig jeweils von einem Deckelabschnitt 12, 13 verschlossen. Insbesondere sind ein erster Deckelabschnitt 12 und ein zweiter Deckelabschnitt 13 vorgesehen. Die Deckelabschnitte 12, 13 sind gegensinnig gewölbt, so dass die Deckelabschnitte 12, 13 bezüglich des Basisabschnitts 11 nach außen gewölbt sind. Der Außenbehälter 10 ist fluiddicht, insbesondere gasdicht. Auch der Außenbehälter 10 ist aus Edelstahl gefertigt.

Zwischen dem Innenbehälter 3 und dem Außenbehälter 10 ist ein den Innenbehälter 3 vollständig umhüllender oder einhüllender Spalt 14 vorgesehen. Der Spalt 14 ist mit einem Vakuum beaufschlagt. Unter einem "Vakuum" ist vorliegend insbesondere ein Druck von weniger als 300 mbar, bevorzugt von weniger als 10⁻³ mbar, weiter bevorzugt von weniger als 10⁻⁷ mbar, zu verstehen. Der Speicherbehälter 1 ist somit vakuumisoliert oder vakuumgedämmt. Dass der Spalt 14 den Innenbehälter 3 vollständig "umhüllt" oder "einhüllt" bedeutet vorliegend, dass der Spalt 14 zum einen umfänglich vollständig um den Basisabschnitt 4 umläuft und zum anderen auch zwischen den beiden Deckelabschnitten 5, 12 sowie zwischen den beiden Deckelabschnitten 6, 13 vorgesehen ist.

In dem Spalt 14 ist ein den Innenbehälter 3 vollständig einhüllendes oder umschließendes Wärmedämmelement oder Isolationselement 15 (Fig. 2) vorgesehen. Das heißt, das Isolationselement 15 umschließt sowohl den Basisabschnitt 4 als auch die Deckelabschnitte 5, 6 des Innenbehälters 3. Das Isolationselement 15 dient der Wärmedämmung. Das Isolationselement 15 ist mehrlagig. Das heißt, das Isolationselement 15 umfasst eine Vielzahl an Lagen oder Schichten. Das Isolationselement 15 kann daher auch als mehrlagiges Isolationselement oder als mehrlagiges Wärmedämmelement bezeichnet werden.

Insbesondere ist das Isolationselement 15 eine sogenannte Multilayer Insulation (MLI). Das Isolationselement 15 umfasst mehrere abwechselnd angeordnete Schichten oder Lagen aus perforierter und/oder geprägter Aluminiumfolie 16 als Reflektor und Glaspapier 17 als Abstandshalter zwischen benachbarten Aluminiumfolien 16. Das Glaspapier 17 kann perforiert und/oder gelocht sein. In der Fig. 2 sind jeweils nur zwei Lagen Aluminiumfolie 16 und zwei Lagen Glaspapier 17 mit einem Bezugszeichen versehen. Das Glaspapier 17 wirkt als Abstandshalter zwischen zwei benachbarten Aluminiumfolien 16, wodurch sich das Isolationselement 15 mit dem in dem Spalt 14 herrschenden Vakuum beaufschlagen lässt. Das Isolationselement 15 füllt den Spalt 14 nur teilweise aus. Das Isolationselement 15 liegt außenseitig an dem Innenbehälter 3 an.

Dem Isolationselement 15 ist eine Metallfolie 18 zugeordnet, welche das Isolationselement 15 in Richtung des Außenbehälters 10 abschließt. Die Metallfolie 18 umschließt oder umhüllt das Isolationselement 15 beziehungsweise den Innenbehälter 3 vollständig. Die Metallfolie 18 kann beispielsweise eine Aluminiumfolie oder eine Kupferfolie sein. Im Vergleich mit der Aluminiumfolie 16 weist die Metallfolie 18 eine größere Dicke oder Wandstärke auf. Die Metallfolie 18 ist optional. Die Metallfolie 18 kann Teil des Isolationselements 15 sein. Die Metallfolie 18 ist vorzugsweise nicht fluiddicht und somit fluiddurchlässig, so dass das Isolationselement 15 evakuiert werden kann.

Zwischen dem Isolationselement 15 beziehungsweise zwischen der Metallfolie 18 und dem Außenbehälter 10 ist ein das Isolationselement 15 vollständig umhüllender oder einhüllender Spalt 19 vorgesehen. Der Spalt 19 ist insbesondere Teil des Spalts 14. Der Spalt 19 kann beispielsweise eine Spaltbreite von 100 mm aufweisen. Der Spalt 19 kann mit einer Schüttung aus Perlit oder dergleichen aufgefüllt sein. Alternativ zu Perlit kann jedoch auch Steinwolle, Glaswolle oder jedes andere geeignete Dämmmaterial eingesetzt werden. Auch das Isolationselement 15 kann anstelle des zuvor erläuterten mehrlagigen Aufbaus eine Schüttung aus Perlit oder dergleichen aufweisen.

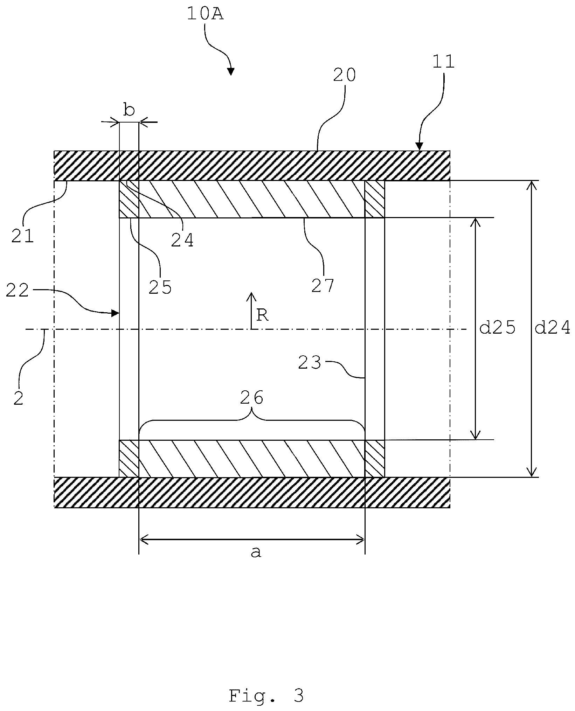

Die Fig. 3 zeigt eine schematische Schnittansicht einer Ausführungsform eines Außenbehälters 10A für den Speicherbehälter 1.

Insbesondere ist in der Fig. 3 nur der Basisabschnitt 11 des Außenbehälters 10A gezeigt. Der Basisabschnitt 11 umfasst eine zylinderförmige Außenfläche 20, die rotationssymmetrisch zu der Symmetrieachse 2 aufgebaut ist, und eine zylinderförmige Innenfläche 21, die ebenfalls rotationssymmetrisch zu der Symmetrieachse 2 aufgebaut ist. Die Außenfläche 20 weist von dem nicht gezeigten Innenbehälter 3 weg. Die Innenfläche 21 weist zu dem Innenbehälter 3 hin. Entlang einer Radialrichtung R betrachtet, die senkrecht zu der Symmetrieachse 2 und von dieser weg orientiert ist, ist die Innenfläche 21 innerhalb der Außenfläche 20 platziert.

Der Basisabschnitt 11 kann aus einer Stahllegierung, insbesondere aus Edelstahl oder aus Kohlenstoffstahl, gefertigt sein. Der Basisabschnitt 11 ist rohrförmig. Dabei ist der Basisabschnitt 11 rotationssymmetrisch zu der Symmetrieachse 2 aufgebaut. Zum Bilden des Außenbehälters 10A wird der Basisabschnitt 11 stirnseitig mit Hilfe der Deckelabschnitte 12, 13 (nicht gezeigt) verschlossen. Die Deckelabschnitte 12, 13 sind stoffschlüssig mit dem Basisabschnitt 11 verbunden. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel und/oder der Verbindungspartner trennen lassen. Stoffschlüssig kann beispielsweise durch Kleben, Löten oder Schweißen verbunden werden.

An dem Basisabschnitt 11 sind mehrere Verstärkungsringe 22, 23 angebracht. Die Anzahl der Verstärkungsringe 22, 23 ist beliebig. In der Fig. 3 sind genau zwei Verstärkungsringe 22, 23 gezeigt. Die Verstärkungsringe 22, 23 können baugleich sein. Entlang der Symmetrieachse 2 betrachtet, sind die Verstärkungsringe 22, 23 um einen Abstand a beabstandet voneinander angeordnet. Jeder Verstärkungsring 22, 23 ist rotationssymmetrisch zu der Symmetrieachse 2 aufgebaut. Die Verstärkungsringe 22, 23 können aus einer Stahllegierung oder aus einem Faserverbundwerkstoff gefertigt sein.

Jeder Verstärkungsring 22, 23 weist eine zylinderförmige Außenfläche 24, die rotationssymmetrisch zu der Symmetrieachse 2 aufgebaut ist, und eine zylinderförmige Innenfläche 25, die ebenfalls rotationssymmetrisch zu der Symmetrieachse 2 aufgebaut ist, auf. Entlang der Radialrichtung R betrachtet ist die Innenfläche 25 innerhalb der Außenfläche 24 angeordnet. Der Innenbehälter 3 ist innerhalb der Verstärkungsringe 22, 23 platziert. Das heißt insbesondere, dass der Innenbehälter 3 durch die Verstärkungsringe 22, 23 hindurchgeführt ist. An der Außenfläche 24 weisen die Verstärkungsringe 22, 23 jeweils einen Durchmesser d24 auf. An der Innenfläche 25 weisen die Verstärkungsringe 22, 23 jeweils einen Durchmesser d25 auf. Der Durchmesser d24 ist größer als der Durchmesser d25.

Die Verstärkungsringe 22, 23 sind mit Ihren Außenflächen 24 mit der Innenfläche 21 des Basisabschnitts 11 verbunden. Hierzu ist eine stoffschlüssige Verbindung vorgesehen. Beispielsweise sind die Verstärkungsringe 22, 23 an ihren Außenflächen 24 mit der Innenfläche 21 verklebt, verlötet und/oder verschweißt. Die Verstärkungsringe 22, 23 sind somit innerhalb des Basisabschnitts 11 platziert. Jeder Verstärkungsring 22, 23 weist entlang der Symmetrieachse 2 betrachtet eine Breite b auf. Zwischen zwei benachbarten Verstärkungsringen 22, 23 ist entlang der Symmetrieachse 2 ein Spalt 26 vorgesehen, der die Verstärkungsringe 22, 23 um den Abstand a voneinander beabstandet.

Der Spalt 26 ist zumindest teilweise mit einem Stützelement 27 ausgefüllt. Über das Stützelement 27 können sich die Verstärkungsringe 22, 23 aufeinander abstützen. Das Stützelement 27 bildet eine hohlzylinderförmige Geometrie, die rotationssymmetrisch zu der Symmetrieachse 2 aufgebaut ist. Das Stützelement 27 kontaktiert die Innenfläche 21 des Basisabschnitts 11 und ist mit dieser stoffschlüssig verbunden, beispielsweise verklebt. Der Innenbehälter 3 ist innerhalb des zylinderförmigen Stützelements 27 platziert.

Das Stützelement 27 ist aus einem Verbundwerkstoff gefertigt. Unter einem "Verbundwerkstoff" ist vorliegend ein Werkstoff oder ein Material zu verstehen, das eine Matrix, beispielsweise ein Kunststoffmaterial, aufweist, in die Füllstoff, beispielsweise in der Form von Fasern, eingebettet ist. Das Kunststoffmaterial kann ein Thermoplast oder ein Elastomer, wie beispielsweise ein Epoxidharz, sein. Die Fasern können Langfasern oder Kurzfasern sein. Die Fasern können Glasfasern, Kohlensstofffasern, Aramidfasern, Naturfasern oder dergleichen sein. Neben Fasern können beliebige andere Füllstoff eingesetzt werden. Das Stützelement 27 kann ein mehrschichtiges Laminat mit Fasern, Fasergeweben, Fasergelegen oder Fasermatten sein, die in die Matrix eingebettet sind. Der Verbundwerkstoff kann auch gießbar oder spritzbar sein. In diesem Fall ist der Verbundwerkstoff bevorzugt kurzfaserverstärkt.

Im Vergleich zu den Verstärkungsringen 22, 23 weist das Stützelement 27 eine verringerte Dichte auf. Entgegen der Radialrichtung R betrachtet, ragt das Stützelement 27 nicht über die Innenfläche 25 hinaus. Dadurch, dass das Stützelement 27 zwischen den Verstärkungsringen 22, 23 angeordnet ist, ist es möglich, dass sich die Verstärkungsringe 22, 23 über das Stützelement 27 aneinander abstützen. Der Abstand a zwischen den Verstärkungsringen 22, 23 kann so vergrößert werden und/oder die Verstärkungsringe 22, 23 können kleiner dimenioniert werden. Das heißt beispielsweise, dass die Breite b der Verstärkungsringe 22, 23 verkleinert werden kann.

Durch die Verwendung des Stützelements 27 kann ein Gewicht des Außenbehälters 10A und damit des Speicherbehälters 1 selbst reduziert werden. Da insbesondere für einen Transport des mit Wasserstoff H2 gefüllten Speicherbehälters 1 dessen Gesamtgewicht einen vorgegebenen Wert nicht überschreiten darf, ist es vorteilhaft, wenn ein Leergewicht des Speicherbehälters 1 möglichst klein ist, so dass im Vergleich zu einem nicht gezeigten Speicherbehälter mit einem größeren Leergewicht eine größere Menge an Wasserstoff H2 transportiert werden kann.

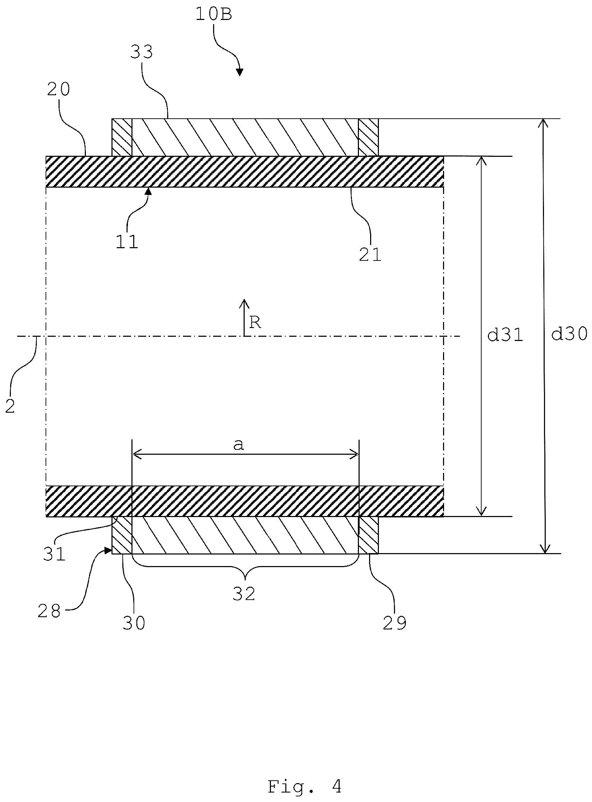

Die Fig. 4 zeigt eine schematische Schnittansicht einer weiteren Ausführungsform eines Außenbehälters 10B für den Speicherbehälter 1.

Der Außenbehälter 10B entspricht von seinem Aufbau her im Wesentlichen dem des Außenbehälters 10A. Im Unterschied zu dem Außenbehälter 10A weist der Außenbehälter 10B keine innenliegenden Verstärkungsringe 22, 23, sondern außenliegende Verstärkungsringe 28, 29 auf. Jeder Verstärkungsring 28, 29 weist eine zylinderförmige Außenfläche 30 und eine zylinderförmige Innenfläche 31 auf. Die Außenfläche 30 weist einen Durchmesser d30 auf. Die Innenfläche 31 weist einen Durchmesser d31 auf. Der Durchmesser d30 ist größer als der Durchmesser d31.

An den Innenflächen 31 sind die Verstärkungsringe 28, 29 stoffschlüssig mit der Außenfläche 20 verbunden. Zwischen zwei benachbarten Verstärkungsringen 28, 29 ist jeweils ein Spalt 32 vorgesehen, der die Verstärkungsringe 28, 29 um einen wie zuvor erwähnten Abstand a voneinander beabstandet hält. Der Spalt 32 ist mit einem Stützelement 33 gefüllt, das ebenfalls aus einem Verbundwerkstoff gefertigt ist. Im Unterschied zu dem Stützelement 27 ist das Stützelement 33 nicht innenseitig, sondern außenseitig an dem Außenbehälter 10B angebracht. Das heißt, dass das Stützelement 33 den Außenbehälter 10B an der Außenfläche 20 kontaktiert. Das Stützelement 33 ist mit der Außenfläche 20 verklebt.

Obwohl die vorliegende Erfindung anhand von Ausführungsbeispielen beschrieben wurde, ist sie vielfältig modifizierbar.

### Verwendete Bezugszeichen

- 1: Speicherbehälter
- 2: Symmetrieachse
- 3: Innenbehälter
- 4: Basisabschnitt
- 5: Deckelabschnitt
- 6: Deckelabschnitt
- 7: Gaszone
- 8: Flüssigkeitszone
- 9: Phasengrenze
- 10: Außenbehälter
- 10A: Außenbehälter
- 10B: Außenbehälter
- 11: Basisabschnitt
- 12: Deckelabschnitt
- 13: Deckelabschnitt
- 14: Spalt
- 15: Isolationselement
- 16: Aluminiumfolie
- 17: Glaspapier
- 18: Metallfolie
- 19: Spalt
- 20: Außenfläche
- 21: Innenfläche
- 22: Verstärkungsring
- 23: Verstärkungsring
- 24: Außenfläche
- 25: Innenfläche
- 26: Spalt
- 27: Stützelement
- 28: Verstärkungsring
- 29: Verstärkungsring
- 30: Außenfläche
- 31: Innenfläche
- 32: Spalt
- 33: Stützelement

- a: Abstand
- b: Breite
- d24: Durchmesser
- d25: Durchmesser
- d30: Durchmesser
- d31: Durchmesser
- g: Schwerkraftrichtung
- H2: Kryogen/Wasserstoff

## Patentansprüche

1. Speicherbehälter (1) zum Speichern eines Kryogens (H2), mit einem Innenbehälter (3) zum Aufnehmen des Kryogens (H2), und einem Außenbehälter (10A, 10B), in welchem der Innenbehälter (3) aufgenommen ist, wobei der Außenbehälter (10A, 10B) Verstärkungsringe (22, 23, 28, 29) zum Verstärken des Außenbehälters (10A, 10B) aufweist, **dadurch gekennzeichnet, dass** der Außenbehälter (10A, 10B) ein aus einem Verbundwerkstoff gefertigtes Stützelement (27, 33) aufweist, das zumindest abschnittsweise innerhalb eines zwischen zwei benachbarten Verstärkungsringen (22, 23, 28, 29) vorgesehenen Spalts (26, 32) angeordnet ist, um die Verstärkungsringe (22, 23, 28, 29) abzustützen.

2. Speicherbehälter nach Anspruch 1, wobei der Innenbehälter (3) innerhalb der Verstärkungsringe (22, 23, 28, 29) angeordnet ist.

3. Speicherbehälter nach Anspruch 1 oder 2, wobei der Innenbehälter (3) innerhalb des Stützelements (27, 33) angeordnet ist.

4. Speicherbehälter nach einem der Ansprüche 1 - 3, wobei der Außenbehälter (10A) das Stützelement (27) einhüllt, oder wobei das Stützelement (33) den Außenbehälter (10B) einhüllt.

5. Speicherbehälter nach einem der Ansprüche 1 - 4, wobei die Verstärkungsringe (22, 23) und das Stützelement (27) innenseitig an dem Außenbehälter (10A) angebracht sind.

6. Speicherbehälter nach Anspruch 5, wobei der Außenbehälter (10A) eine dem Innenbehälter (3) zugewandte Innenfläche (21) aufweist, und wobei die Verstärkungsringe (22, 23) und das Stützelement (27) zumindest abschnittsweise stoffschlüssig mit der Innenfläche (21) verbunden sind.

7. Speicherbehälter nach einem der Ansprüche 1 - 4, wobei die Verstärkungsringe (28, 29) und das Stützelement (33) außenseitig an dem Außenbehälter (10B) angebracht sind.

8. Speicherbehälter nach Anspruch 7, wobei der Außenbehälter (10B) eine dem Innenbehälter (3) abgewandte Außenfläche (20) aufweist, und wobei die Verstärkungsringe (28, 29) und das Stützelement (33) stoffschlüssig mit der Außenfläche (20) verbunden sind.

9. Speicherbehälter nach einem der Ansprüche 1 - 6, wobei zwischen dem Innenbehälter (3) und dem Außenbehälter (10A) ein mit einem Vakuum beaufschlagter Spalt (14) vorgesehen ist, wobei die Verstärkungsringe (22, 23) und das Stützelement (27) innerhalb des Spalts (14) angeordnet sind.

10. Speicherbehälter nach Anspruch 9, wobei in dem Spalt (14) ein den Innenbehälter (3) einhüllendes Isolationselement (15) angeordnet ist.

11. Speicherbehälter nach einem der Ansprüche 1 - 10, wobei der Verbundwerkstoff langfaserverstärkt oder kurzfaserverstärkt ist.

12. Speicherbehälter nach einem der Ansprüche 1 - 11, wobei der Verbundwerkstoff ein Laminat oder eine Gussmasse ist.

13. Speicherbehälter nach einem der Ansprüche 1 - 12, wobei die Verstärkungsringe (22, 23, 28, 29) aus einer Aluminiumlegierung oder aus einem Verbundwerkstoff gefertigt sind.

14. Speicherbehälter nach einem der Ansprüche 1 - 13, wobei der Innenbehälter (3) und/oder der Außenbehälter (10A, 10B) aus Edelstahl gefertigt sind.

15. Speicherbehälter nach einem der Ansprüche 1 - 14, wobei der Außenbehälter (10A, 10B) einen zylinderförmigen Basisabschnitt (11) aufweist, an dem die Verstärkungsringe (22, 23, 28, 29) angebracht sind.

## Claims

1. Storage container (1) for storing a cryogen (H2), comprising an inner container (3) for receiving the cryogen (H2), and an outer container (10A, 10B) in which the inner container (3) is received, the outer container (10A, 10B) having reinforcing rings (22, 23, 28, 29) for reinforcing the outer container (10A, 10B), **characterized in that** the outer container (10A, 10B) comprises a support element (27, 33) made of a composite material, which support element is arranged at least partially within a gap (26, 32) provided between two adjacent reinforcing rings (22, 23, 28, 29), in order to support the reinforcing rings (22, 23, 28, 29).

2. Storage container according to claim 1, wherein the inner container (3) is arranged within the reinforcing rings (22, 23, 28, 29).

3. Storage container according to claim 1 or 2, wherein the inner container (3) is arranged within the support element (27, 33).

4. Storage container according to any of claims 1 to 3, wherein the outer container (10A) encloses the support element (27), or wherein the support element (33) envelops the outer container (10B).

5. Storage container according to any of claims 1 to 4, wherein the reinforcing rings (22, 23) and the support element (27) are attached to the inside of the outer container (10A).

6. Storage container according to claim 5, wherein the outer container (10A) has an inner surface (21) facing the inner container (3), and wherein the reinforcing rings (22, 23) and the support element (27) are at least partially materially bonded to the inner surface (21).

7. Storage container according to any of claims 1 to 4, wherein the reinforcing rings (28, 29) and the support element (33) are attached to the outside of the outer container (10B).

8. Storage container according to claim 7, wherein the outer container (10B) has an outer surface (20) facing away from the inner container (3), and wherein the reinforcing rings (28, 29) and the support element (33) are materially bonded to the outer surface (20).

9. Storage container according to any of claims 1 to 6, wherein a gap (14) subjected to a vacuum is provided between the inner container (3) and the outer container (10A), wherein the reinforcing rings (22, 23) and the support element (27) are arranged within the gap (14).

10. Storage container according to claim 9, wherein an insulating element (15) enclosing the inner container (3) is arranged in the gap (14).

11. Storage container according to any of claims 1 to 10, wherein the composite material is long-fiber reinforced or short-fiber reinforced.

12. Storage container according to any of claims 1 to 11, wherein the composite material is a laminate or a casting compound.

13. Storage container according to any of claims 1 to 12, wherein the reinforcing rings (22, 23, 28, 29) are made of an aluminum alloy or of a composite material.

14. Storage container according to any of claims 1 to 13, wherein the inner container (3) and/or the outer container (10A, 10B) are made of stainless steel.

15. Storage container according to any of claims 1 to 14, wherein the outer container (10A, 10B) has a cylindrical base section (11) to which the reinforcing rings (22, 23, 28, 29) are attached.

## Revendications

1. Récipient de stockage (1) pour le stockage d'un agent cryogène (H2), comportant un récipient intérieur (3) pour la réception de l'agent cryogène (H2), et un récipient extérieur (10A, 10B) dans lequel le récipient intérieur (3) est reçu, dans lequel le récipient extérieur (10A, 10B) présente des anneaux de renfort (22, 23, 28, 29) pour le renfort du récipient extérieur (10A, 10B), **caractérisé en ce que** le récipient extérieur (10A, 10B) présente un élément de soutien (27, 33) fabriqué en un matériau composite et disposé, au moins dans certaines sections, à l'intérieur d'un espace (26, 32) prévu entre deux anneaux de renfort (22, 23, 28, 29) adjacents afin de soutenir les anneaux de renfort (22, 23, 28, 29).

2. Récipient de stockage selon la revendication 1, dans lequel le récipient intérieur (3) est disposé à l'intérieur des anneaux de renfort (22, 23, 28, 29).

3. Récipient de stockage selon la revendication 1 ou 2, dans lequel le récipient intérieur (3) est disposé à l'intérieur de l'élément de soutien (27, 33).

4. Récipient de stockage selon l'une des revendications 1 à 3, dans lequel le récipient extérieur (10A) enveloppe l'élément de soutien (27), ou dans lequel l'élément de soutien (33) enveloppe le récipient extérieur (10B).

5. Récipient de stockage selon l'une des revendications 1 à 4, dans lequel les anneaux de renfort (22, 23) et l'élément de soutien (27) sont montés à l'intérieur du récipient extérieur (10A).

6. Récipient de stockage selon la revendication 5, dans lequel le récipient extérieur (10A) présente une surface intérieure (21) tournée vers le récipient intérieur (3), et dans lequel les anneaux de renfort (22, 23) et l'élément de soutien (27) sont reliés, au moins dans certaines sections, à la surface intérieure (21) par liaison de matière.

7. Récipient de stockage selon l'une des revendications 1 à 4, dans lequel les anneaux de renfort (28, 29) et l'élément de soutien (33) sont montés à l'extérieur du récipient extérieur (10B).

8. Récipient de stockage selon la revendication 7, dans lequel le récipient extérieur (10B) présente une surface extérieure (20) opposée au récipient intérieur (3), et dans lequel les anneaux de renfort (28, 29) et l'élément de soutien (33) sont reliés à la surface extérieure (20) par liaison de matière.

9. Récipient de stockage selon l'une des revendications 1 à 6, dans lequel un espace (14) soumis à un vide est prévu entre le récipient intérieur (3) et le récipient extérieur (10A), dans lequel les anneaux de renfort (22, 23) et l'élément de soutien (27) sont disposés à l'intérieur de l'espace (14).

10. Récipient de stockage selon la revendication 9, dans lequel un élément d'isolation (15) enveloppant le récipient intérieur (3) est disposé dans l'espace (14).

11. Récipient de stockage selon l'une des revendications 1 à 10, dans lequel le matériau composite est renforcé de fibres longues ou de fibres courtes.

12. Récipient de stockage selon l'une des revendications 1 à 11, dans lequel le matériau composite est un stratifié ou une masse coulée.

13. Récipient de stockage selon l'une des revendications 1 à 12, dans lequel les anneaux de renfort (22, 23, 28, 29) sont fabriqués en un alliage d'aluminium ou en un matériau composite.

14. Récipient de stockage selon l'une des revendications 1 à 13, dans lequel le récipient intérieur (3) et/ou le récipient extérieur (10A, 10B) sont fabriqués en acier inoxydable.

15. Récipient de stockage selon l'une des revendications 1 à 14, dans lequel le récipient extérieur (10A, 10B) présente une section de base (11) cylindrique sur laquelle sont montés les anneaux de renfort (22, 23, 28, 29).
